**Europäisches Patentamt**

**European Patent Office**

**Office européen des brevets**

(19)

(11) Veröffentlichungsnummer: **0 142 808**
**B1**

(12) # EUROPÄISCHE PATENTSCHRIFT

(45) Veröffentlichungstag der Patentschrift:
22.04.87

(51) Int. Cl.⁴: **H 02 P 7/62, H 02 P 1/30**

(21) Anmeldenummer: **84113638.5**

(22) Anmeldetag: **12.11.84**

(54) Verfahren und Vorrichtung zum Betrieb einer über einen Stromzwischenkreisumrichter gespeisten Asynchronmaschine bei Netzstörung.

(30) Priorität: **21.11.83 DE 3341952**

(43) Veröffentlichungstag der Anmeldung:
**29.05.85 Patentblatt 85/22**

(45) Bekanntmachung des Hinweises auf die Patenterteilung:
**22.04.87 Patentblatt 87/17**

(84) Benannte Vertragsstaaten:
**AT BE CH DE FR GB LI SE**

(56) Entgegenhaltungen:
EP - A - 0 019 138
DE - A - 2 520 164
DE - A - 2 926 378
DE - A - 3 134 002

PATENTS ABSTRACTS OF JAPAN, Band 5, Nr. 51, (E51)
(57) 10. April 1981
PATENTS ABSTRACTS OF JAPAN, Band 7, Nr. 200
(E169)(143= 3. September 1983
PATENTS ABSTRACTS OF JAPAN, Band 7, Nr. 222
(E201)(74) 4. Oktober 1983

(73) Patentinhaber: **Siemens Aktiengesellschaft Berlin und München, Wittelsbacherplatz 2, D-8000 München 2 (DE)**

(72) Erfinder: **Schönherr, Andreas, Dipl.-Ing., Saidelsteig 3, D-8520 Erlangen (DE)**

## Beschreibung

Die Erfindung betrifft ein Verfahren zum Betrieb einer über einen Stromzwischenkreisumrichter aus einem Wechselspannungsnetz gespeisten Asynchronmaschine, bei einer Netzstörung, wobei der Umrichter bei Beginn der Netzstörung gesperrt wird bis der Strom im Zwischenkreis abgeklungen ist. Die Erfindung betrifft ferner eine Vorrichtung zur Durchführung des Verfahrens.

Bricht die Wechselspannung des speisenden Netzes, das durchaus drei oder mehr Phasen aufweisen kann, zusammen oder treten Amplituden- oder Frequenzsprünge auf, so muss der Umrichter abgeschaltet werden, damit keine Fehlkommutierungen auftreten. Damit wird die Maschine rasch stromlos und der Maschinenfluss klingt langsam (exponentiell) ab. Bei Stromwiederkehr kann aber ein nennenswertes Drehmoment nur erzeugt werden, wenn ein entsprechender Fluss mit einer geeigneten Phasenlage zum Strom vorliegt.

Soll beim Wiederzuschalten des Netzes auf die noch laufende Maschine daher der gewünschte Fluss möglichst schnell wieder aufgebaut werden, so muss beim Zuschalten die Frequenz am maschinenseitigen Ausgang des Stromrichters («Maschinenfrequenz») der Maschinendrehzahl entsprechen. Dazu kann während der Netzunterbrechung die Maschinenfrequenz über eine Tachomaschine der Maschinendrehzahl nachgeführt werden. Dies erfordert einerseits eine Tachomaschine, andererseits können bei Maschinenfrequenzen, die über der Netzfrequenz liegen, Probleme beim synchronisierten Wiederzuschalten auf die noch erregte Maschine entstehen. Das synchronisierte Zuschalten des Netzes wird allgemein dadurch erschwert, dass das Netz nach einer Störung zunächst unsymmetrisch ist und eine gewisse Zeit benötigt, um nach dem Wiederaufschalten symmetrisch zu werden.

Ausserdem ist es häufig unerwünscht, dass der Maschinenfluss während der Störung ständig abklingt und erst nach der Netzstörung wieder aufgebaut werden kann.

Andere Methoden, bei denen z.B. die Maschine nach der Netzunterbrechung vom Umrichter getrennt und direkt auf das Netz geschaltet wird, oder bei denen die Maschinenfrequenz nach einer Rampenfunktion langsam von Null ausgehend hochgefahren wird, bis Frequenz und Drehzahl übereinstimmen, scheiden aus technologischen Gründen häufig aus.

Aufgabe der Erfindung ist es, ein anderes Verfahren zum Überbrücken einer Netzstörung beim Betrieb einer derartigen über einen Stromzwischenkreisumrichter gespeisten Last bereitzustellen. Die Erfindung benötigt dazu keinen Tacho und keine direkte Aufschaltung der Maschine auf das Netz. Auch das synchronisierte Aufschalten des Umrichters auf das wiedergekehrte Netz ist mit einfachen Mitteln möglich. Insbesondere wird durch die Erfindung erreicht, dass in der Maschine auch während der Betriebsstörung der gewünschte Fluss weitgehend erhalten bleibt.

Dies wird erreicht durch ein Verfahren mit den Merkmalen des Anspruchs 1. Vorteilhafte Weiterbildungen des Verfahrens sowie eine geeignete Vorrichtung hierzu sind in den weiteren Ansprüchen gekennzeichnet.

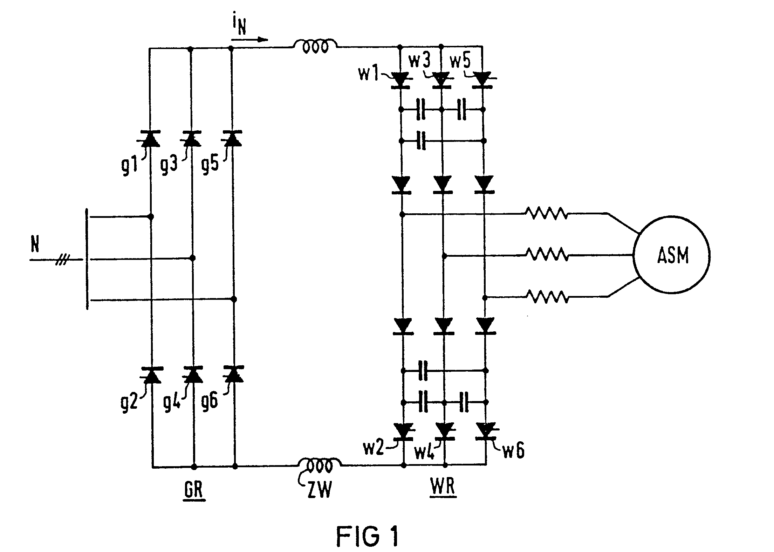

Nach Fig. 1 ist eine Asynchronmaschine ASM aus einem Netz N über einen Zwischenkreisumrichter mit eingeprägtem Zwischenkreisstrom gespeist. Der Zwischenkreisumrichter besteht dabei aus einem gesteuerten netzgeführten Stromrichter (Gleichrichter GR), wobei der Zündwinkel dieser Ventile derart geregelt ist, dass die Spannung im Zwischenkreis den Wert annimmt, der zur Erzeugung eines vorgegebenen Gleichstroms $i_N$ entspricht. Die Aussteuerung Null entspricht dabei einem Steuerwinkel von 90°, bezogen auf die Netzspannung.

Dieser Zwischenkreis-Gleichstrom wird durch einen selbstgeführten maschinenseitigen Stromrichter (Wechselrichter WR) mit einer für die Steuerung der Last nötigen Maschinenfrequenz auf die Anschlüsse der Last verteilt. Die Ventile w1 bis w6 sind entsprechend Fig. 1 vorteilhaft durch Kommutierungskondensatoren und Dioden zu einem Phasenfolge-Wechselrichter ergänzt.

Bei Unterbrechungen des Netzes N oder anderen Netzstörungen muss der Stromzwischenkreisumrichter abgeschaltet werden, damit keine Fehlkommutierungen auftreten können. Dabei wird die Maschine stromlos und mit dem Verschwinden des Magnetisierungsstromes beginnt der Maschinenfluss exponentiell abzuklingen und kann dabei praktisch zu Null werden. Bei entregter Maschine muss dann zunächst der Fluss wieder aufgebaut werden, bevor die Maschine ein Drehmoment entwickeln kann. Der Aufbau des Flusses geht aber entsprechend der Flusszeitkonstanten relativ langsam vor sich.

Gemäss der Erfindung wird nun während des Netzausfalls der Fluss aufrechterhalten. Hierzu ist erforderlich, dass durch die Maschine der zum Fluss gehörende Magnetisierungsstrom fliesst. Unter dem Magnetisierungsstrom versteht man dabei den Strom, der im Leerlauf zur Aufrechterhaltung des Flusses nötig ist. Dieser Magnetisierungsstrom kann als ein synchron mit dem Flussvektor umlaufender Vektor betrachtet werden.

Zur Erzeugung dieses Magnetisierungsstromes werden geeignete Ventile des Umrichters gezündet, wobei Betrag und Frequenz dieses Magnetisierungsstromes durch die Ansteuerung der Ventile vorgegeben werden kann, während die nötige Energie zum Aufbau dieses Stromes der kinetischen Energie der noch laufenden Maschine entnommen wird. Die Maschine wird also sozusagen «kinetisch gepuffert».

Hierzu wird der Umrichter zunächst gesperrt, bis der Maschinenstrom und damit der Zwischenkreisstrom zuverlässig erloschen ist. Dies ist in der Regel nach etwa 100 bis 200 ms der Fall und kann durch eine Zeitstufe überwacht werden, der die entsprechende Wartezeit fest vorgegeben wird.

Sodann wird die Taktung des maschinenseitigen Stromrichters synchron mit der Maschinendrehzahl wieder aufgenommen und über den Zwischenkreis und zwei in Reihe liegende Ventile des netzseitigen Stromrichters wird ein Stromkreis für den Maschinenstrom (d.h. den jetzt von der EMK der Maschine angetriebenen Magnetisierungsstrom) geschlossen. Dadurch baut sich der für den gewünschten Fluss benötigte Maschinenstrom wieder auf, wobei die Taktfrequenz des maschinenseitigen Stromrichters der Maschinenfrequenz nachgeführt wird. Der maschinensynchrone Takt für den Wechselrichter kann dabei aus den Klemmenspannungen der Maschine abgeleitet werden. Der Fluss bleibt dabei auf dem gewünschten Wert, wenn die Maschinenfrequenz nach der maschinensynchronen Wiederaufnahme der Taktung mit einer Frequenz gesteuert wird, die aus der Regelabweichung zwischen dem gemessenen Maschinenstrom und einem aus der Maschinenfrequenz abgeleiteten Maschinenstrom-Sollwert bestimmt wird. Die Maschine wird dabei im leicht generatorischen Betrieb gesteuert und deckt die in der Maschine und im Umrichter entstehenden Verluste. Insbesondere kann dabei an der Maschinenspannung auch die Versorgungsspannung abgegriffen werden, die für die zur Steuerung des Verfahrens benötigten elektrischen Bauteile erforderlich ist.

Nach Beendigung der Netzstörung, d.h. bei wiedergekehrtem ungestörtem Netz kann nun der netzseitige Stromrichter netzsynchron zugeschaltet werden. Dieses Zuschalten erfolgt vorteilhaft dann, wenn sich nach einer Netzstörung wieder ein symmetrisches Netz ausgebildet hat. Überstromspitzen oder andere Einschaltvorgänge beim Aufschalten auf das wiedergekehrte Netz lassen sich vermeiden, wenn der netzseitige Stromrichter beim Zuschalten zunächst auf den Aussteuerungsgrad Null ausgesteuert ist und erst anschliessend auf den Wert hochgefahren wird, der für den Sollstrom im ungestörten Betrieb angestrebt ist.

Anhand von einem Ausführungsbeispiel und 5 weiteren Figuren wird die Erfindung näher erläutert.

Dabei zeigt Fig. 2 die Steuerung des Umrichters und der Last, wobei die Steuerleitungen für die in Fig. 3 gezeigten Steuerimpulse nicht näher ausgeführt sind. Fig. 4 verdeutlicht schematisch die Funktion der für den Betrieb bei Netzausfall benötigten Steuerschaltung, während die Figuren 5 und 6 die Ansteuerimpulse für den netzseitigen Gleichrichter und den maschinenseitigen Wechselrichter darstellen.

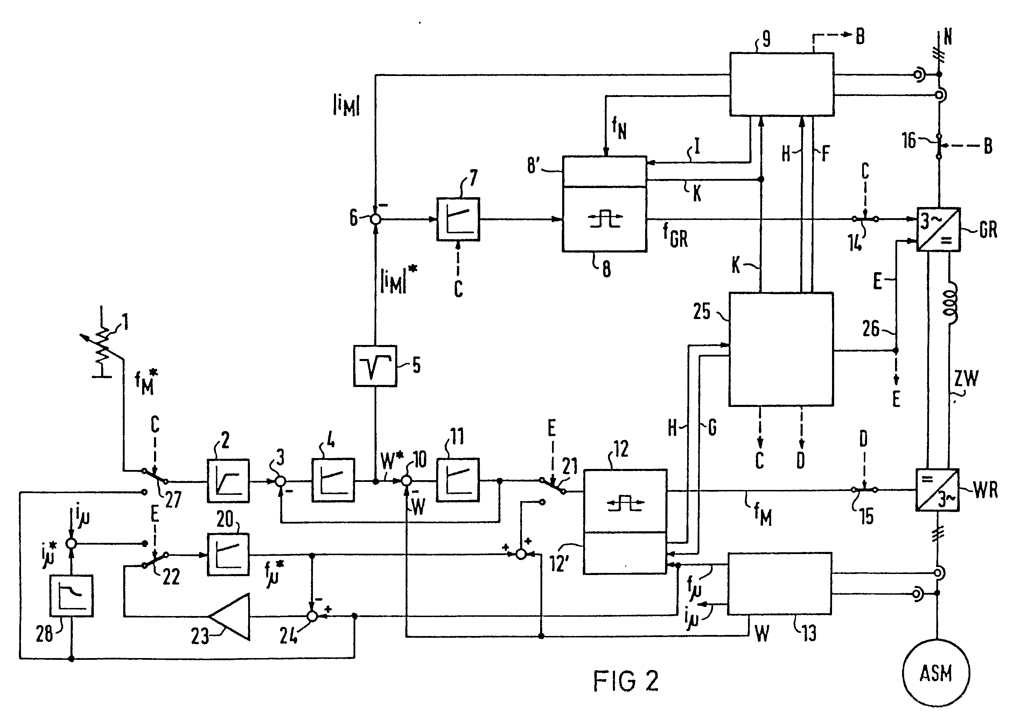

Zur Steuerung der Asynchronmaschine ASM über den maschinenseitigen Wechselrichter WR, der über den Gleichstromzwischenkreis ZW und den netzseitigen Gleichrichter GR aus dem Netz N gespeist wird, dient in dem in Fig. 2 gezeigten Anwendungsbeispiel eine Regeleinrichtung, wie sie z.B. in der deutschen Offenlegungsschrift 2 919 852 beschrieben ist. Die in Fig. 2 dargestellte Schalterstellung entspricht dabei dem in dieser Offenlegungsschrift beschriebenen Normalbetrieb.

Dabei wird an einer Einstelleinrichtung 1 ein Drehzahl-Sollwert $f_M^*$ abgegriffen und über einen Hochlaufgeber 2 und eine Vergleichsstelle 3 einem Drehzahlregler 4 zugeführt. Das am Regler 4 anstehende Ausgangssignal stellt das Soll-Drehmoment dar, das bei gegebenem Fluss der flusssenkrechten Komponente $i_{\varphi 2}$ («Wirkstrom») eines Ständerstromvektors proportional ist. Ein Funktionsbildner 5 bildet aus diesem Wirkstrom und dem zum gewünschten Fluss gehörenden Magnetisierungsstrom $i_{\varphi 1}^*$ den Betrag des Ständerstromvektors, der durch $\sqrt{i_{\varphi 1}^* {}^2 + i_{\varphi 2}^* {}^2}$ gegeben ist und an einer Vergleichsstelle 6 mit dem entsprechenden Istwert des Ständerstromvektors, der am Eingang, Ausgang oder Zwischenkreis des Umrichters abgegriffen werden kann, verglichen wird. Ein Strombetrag-Regler 7 bildet daraus den Steuerwinkel, mit dem der Aussteuerungsgrad des Gleichrichters GR vorgegeben wird. Dieser Steuerwinkel ist dem Steuersatz 8 des netzgeführten Stromrichters 8 zugeführt, dessen netzsynchrone Referenzspannung von einer den Netzzustand beobachtenden Netzerfassungseinrichtung 9 geliefert wird. Die die Referenzfrequenz verarbeitenden Bauteile des Steuersatzes 8 sind in der Regel gerätetechnisch in die Netzerfassungseinrichtung 9 integriert und in Fig. 2 lediglich symbolisch als ein «Synchronisierteil» 8' dargestellt. Der Steuersatz 8 liefert somit die Frequenz $f_{GR}$ für die Zündimpulse des netzgeführten Gleichrichters GR, mit dem die Amplitude des Ständerstromvektors der Asynchronmaschine bestimmt wird.

Die Frequenz des Ständerstromvektors, d.h. seine Richtung in einem ständerbezogenen, raumfesten Bezugssystem, wird dadurch vorgegeben, dass die Ausgangsgrösse W* des Drehzahlreglers 4 als Lastzustands-Sollwert über eine Vergleichsstelle 10 einem Lastzustandsregler 11 zugeführt wird, von dessen Ausgangssignal der Steuersatz 12 des maschinenseitigen Wechselrichters WR bestimmt ist. Die Ausgangsfrequenz $f_M$ dieses maschinenseitigen Steuersatzes 12 bestimmt die Umlauffrequenz des Ständerstromvektors bzw. der Klemmenspannung, wobei der Frequenzistwert und die Phase als Bezugssignal für das Anfahren des Wechselrichters nach einer Sperrung benötigt wird. Die entsprechende Istwert-Erfassungseinrichtung ist wieder symbolisch in eine «Last-Erfassungseinrichtung» 13 und einen Referenzsignalgenerator («Synchronisierteil» 12') gemäss Fig. 2 aufgeteilt.

Diese Anordnung kommt ohne eine Tachomaschine aus, wenn der Drehzahlistwert für die Vergleichsstelle 3 am Ausgangssignal des Reglers 11 abgegriffen wird.

Da durch den Strombetrags-Regler 7 die Amplitude des Stromes bestimmt ist, wird durch den Lastzustandsregler 11 die Richtung des Ständerstromvektors vorgegeben. Dabei ist es vorteilhaft, als Lastzustandsgrösse W den Tangens des «Lastwinkels», d.h. des Winkels zwischen Feldachse und Ständerstromvektor, zu benutzen. Dieser Lastwinkel ist durch den Quotienten von Wirkstrom und Magnetisierungsstrom bestimmt; bei konstantem Fluss-Sollwert (also konstantem Soll-Magnetisierungsstrom) ist dann der Sollwert W* der Lastzustandsgrösse direkt proportional dem am Regler 4 abgegriffenen Soll-Drehmoment bzw. dem Soll-Wirkstrom. Der entsprechende Istwert kann von einer Last-Erfassungseinrichtung 13 aus den elektrischen Grössen der Asynchronmaschine berechnet werden.

Die bisher beschriebenen Bestandteile der Vorrichtung nach Fig. 2 stellen somit den netzgeführten Gleichrichter, den Gleichstromzwischenkreis und den maschinenseitigen Wechselrichter zur Speisung der Asynchronmaschine sowie die für den Normalbetrieb der Maschine bei ungestörtem Netz benötigte Regeleinrichtung zur Steuerung des Ständerstromes dar. Die Netzerfassungseinrichtung 9 überwacht dabei den Zustand des Netzes und sperrt bei Netzstörung den Stromrichter. Zur Sperrung des Stromrichters ist meistens vorgesehen, die Zündimpulse für den Gleichrichter und den Wechselrichter zu sperren (das ist durch entsprechende, von einem Schaltimpuls C bzw. D betätigte Schalter 14 und 15 in den Zündimpuls-Zuführleistungen angedeutet) und den Umrichter über einen Netzschalter 16 vom Netz zu trennen (Schaltimpuls B).

Gemäss der Erfindung ist nun ein Zusatz-Stromregler 20 vorgesehen, auf dessen Ausgang der Eingang des maschinenseitigen Steuersatzes 12 zur Regelung der Frequenz des Maschinenstromes während der Netzstörung umschaltbar ist. Für die Stabilität des Betriebes ist es dabei vorteilhaft, wenn dem Ausgangssignal des Zusatz-Stromreglers 20 (d.h. dem Frequenz-Sollwert $f_\mu^*$, mit dem der Wechselrichter während der Netzstörung betrieben wird) der Lastzustand-Istwert W additiv zugeführt wird.

Die Vorrichtung enthält dabei Schaltmittel, durch die im Normalbetrieb der Ausgang des Zusatz-Stromreglers 20 vom maschinenseitigen Steuersatz trennbar (Umschalter 21, Steuerimpuls E) und der Maschinenfrequenz nachführbar ist. Für diese Nachführung des Zusatzstromreglers 20 ist mittels des Umschalters 22 dessen Eingang über einen Verstärker 23 auf den Ausgang eines Vergleichsgliedes 24 geschaltet, dessen Istwert am Reglerausgang abgegriffen ($f_\mu^*$) ist. Um die Wechselrichter-Taktung synchron mit der Maschinendrehzahl wieder aufzunehmen, müsste der Vergleichsstelle 24 die Maschinendrahzahl aufgeschaltet werden. Da die Wiederaufnahme der Taktung aber praktisch im Leerlauf der Maschine erfolgt, wo Maschinenfrequenz und Maschinendrehzahl synchron sind, genügt es, die Maschinenfrequenz aus den Klemmenspannungen der Maschine bzw. den Ventilspannungen des Wechselrichters abzuleiten und der Vergleichsstelle als Sollwert für die Nachführung von $f_\mu^*$ aufzuschalten.

Dieser Zusatz-Stromregler 20 bewirkt bei diesem Ausführungsbeispiel, dass zunächst das Signal $f_\mu^*$ während des ungestörten Netzbetriebes gleich der Maschinenfrequenz ist. Vor allem stellt er aber sicher, dass $f_\mu^*$ als Ersatz-Frequenzsollwert bereitsteht, der während der Netzstörung bei abgeschaltetem Wechselrichter gleich der Maschinendrehzahl ist, so dass beim Wiedereinschalten des Wechselrichters der Reglerausgang auf dem zum Leerlaufbetrieb nötigen Frequenzsollwert steht.

Zum Wiedereinschalten des Wechselrichters wird durch Umlegen des Umschalters 22 der Eingang des Zusatzstromreglers 20 von der Regelabweichung zwischen einem aus der Maschinenfrequenz (vorzugsweise unter Verwendung eines Kennliniengebers 28) abgeleiteten Strom-Sollwertes $i_\mu^*$ und des Maschinenstrom-Istwertes $i_\mu$ beaufschlagt. Mit dem gleichen Steuerimpuls E wird auch der Schalter 21 umgelegt. Werden auch die Zündimpulse für den maschinenseitigen Stromrichter WR mittels des Zündimpuls-Trennschalters 15 wieder freigegeben (Schaltimpuls D), so läuft der Wechselrichter nunmehr mit der von $f_\mu^*$ gesteuerten Frequenz an, wenn gleichzeitig durch Zündung zweier in Reihe liegender Gleichrichterventile der Maschinenstromkreis geschlossen wird.

Die Maschine läuft dabei zunächst im Leerlauf. Der seit Beginn der Umrichtersperre abklingende Fluss wird aber jetzt wieder auf seinen gewünschten Wert hochgefahren, indem die Wechselrichterfrequenz mittels des Zusatz-Stromreglers verschoben (erniedrigt) wird, bis der Maschinenstrom seinen dem Fluss-Sollwert entsprechenden Sollwert $i_\mu^*$ erreicht. Der Kennliniengeber 28 ermöglicht dabei einen Feldschwächbetrieb, indem der Flusssollwert bei hohen Frequenzen zurückgenommen wird.

Nach Wiederkehr des ungestörten Netzes werden dann die Schaltmittel wieder in ihre ursprüngliche Lage zurückversetzt und der netzseitige Stromrichter GR wird auf das Netz aufgeschaltet.

Die erwähnten Schaltimpulse werden von einer Schaltsteuerung 25 im Zusammenwirken mit der Netzerfassungseinrichtung 9 und den Steuersätzen 8 und 12 (bzw. deren «Synchronisierteilen» 8' und 12') erzeugt. Aufgabe dieser Steuerung ist es, zur Erhaltung des Flusses beim Auftreten einer Netzstörung im Umrichter durch geeignete Zündung entsprechender Ventile einen vom Netz getrennten, die Anschlüsse der Ständerwicklung der Asynchronmaschine derart verbindenden Stromkreis einzuschalten, dass der benötigte Magnetisierungsstrom durch die Maschine fliessen kann.

Vorteilhaft unterdrückt die Schaltsteuerung den Übergang in diesen Störungsbetrieb für sehr kurze Netzstörungen, z.B. Netzstörungen unter 1,5 ms. Bei derartig kurzen Netzstörungen ist eine Störung in Umrichter und Maschine nicht zu befürchten.

Die Schaltsteuerung bewirkt bei Erfassung einer längeren Störung, dass zunächst der Umrichter gesperrt wird. Dies ist in Fig. 2 durch die Zündimpuls-Sperrschalter 14 und 15 dargestellt, die allerdings die Sperrung des Umrichters nur symbolisch darstellen.

Vorteilhaft wird nämlich zur Sperrung des Umrichters zwar die Zündung der Ventile des netzseitigen Stromrichters gesperrt (Öffnen des Schalters 14 durch den Impuls C), jedoch ist es häufig günstiger, bei der Steuerung des maschinenseitigen Wechselrichters lediglich den Kommutierungstakt anzuhalten. Übliche Steuersätze enthalten einen Spannungs-Frequenz-Umsetzer, z.B. einen spannungsgesteuerten Dreiecksgenerator, wobei gewisse Schwingungszustände von einem Ringzähler gezählt werden und der Ringzähler die zyklische Ansteuerung der Ventile steuert. Um nun den Kommutierungstakt anzuhalten («Kommutierungssperre») braucht lediglich das Rücksetzen der Dreiecksspannung unterbunden bzw. der Stand des Ringzählers für die Dauer der Kommutierungssperre festgehalten zu werden (Steuersignal D), was ohne Verwendung eines Zündimpuls-Unterbrecherschalters 15 direkt im Steuersatz 12 bzw. dessen Synchronisierteil 12' geschehen kann. Bei dieser Massnahme bleiben also die Zündimpulse für die letzten, vor der Netzstörung gezündeten Ventile erhalten, und es wird dadurch erreicht, dass der Zwischenkreisstrom ohne übermässige Stromspitzen innerhalb kurzer Zeit zusammenbricht und alle Ventile des Umrichters von selbst erlöschen. Das Erlöschen des Zwischenkreisstromrichters braucht dabei nicht gesondert überwacht zu werden, vielmehr genügt es, diesen Zustand der Gleichrichtersperre und der Kommutierungssperre am Wechselrichter für eine fest vorgegebene Zeit aufrechtzuerhalten.

Anschliessend werden nun mit dem Impuls E die Schaltmittel 21, 22 betätigt. Gleichzeitig werden zwei in Reihe liegende Ventile des netzgeführten Stromrichters GR gezündet («Querzündung», in Fig. 2 durch eine eigene Hilfs-Zündimpulsleitung 26 dargestellt) und der Gleichrichter wird synchron mit der Maschinenfrequenz wieder getaktet. Dazu wird im Steuersatz 12, 12' die vom Zusatzregler 20 gelieferte Steuerspannung in eine synchron mit der Maschinenfrequenz $f_\mu$ startende Impulsfolge $f_M$ umgesetzt.

Bevorzugt wird bei Beginn der Netzstörung ein weiterer Umschalter 27 betätigt, der zwischen der Eingabeeinrichtung 1 und dem Hochlaufgeber 2 angeordnet ist und der während der Netzstörung dem Eingang des Hochlaufgebers die Maschinenfrequenz $f_\mu$ aufschaltet. Schaltet der Umschalter 27 mit dem Wieder-Zuschalten des netzseitigen Stromrichters wieder in seine ursprüngliche Lage, so wird dadurch die Taktfrequenz auf die tatsächliche momentane Maschinendrehzahl umgeschaltet und über den Hochlaufgeber erst langsam auf den für den ungestörten Betrieb vorgesehenen Sollwert $f_M^*$ hochgefahren. Es entstehen dadurch keine Frequenz- und Momentansprünge, wenn der Gleichrichter wieder netzsynchron eingeschaltet wird. Ferner kann es für den Fall, dass die Asynchronmaschine in beiden Drehrichtungen betrieben werden kann, erforderlich sein, das Vorzeichen des Strom-Sollwertes und des Maschinenfrequenz-Istwertes durch entsprechende (in Fig. 2 nicht dargestellte) Bewertungsschaltungen umzuschalten.

Ebenfalls in Fig. 2 ist nicht dargestellt, dass die Versorgungsspannung der einzelnen Elektronikteile der Regelung während der Netzstörung vorteilhaft von einem Netzteil geliefert wird, das an die Klemmenspannung der Asynchronmaschine angeschlossen ist, so dass auch bei Netzausfall die Spannungsversorgung der Regelung sichergestellt ist.

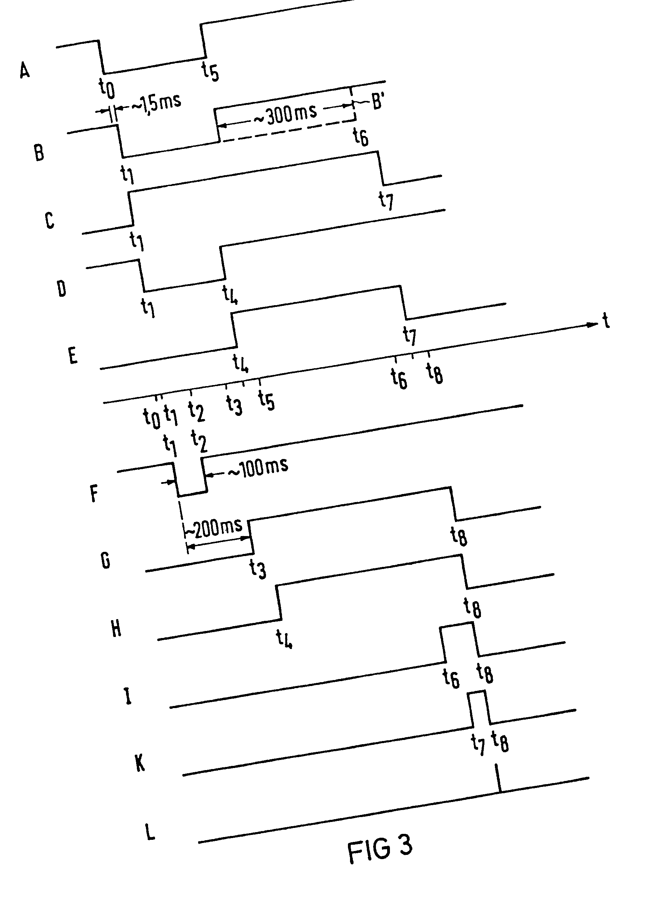

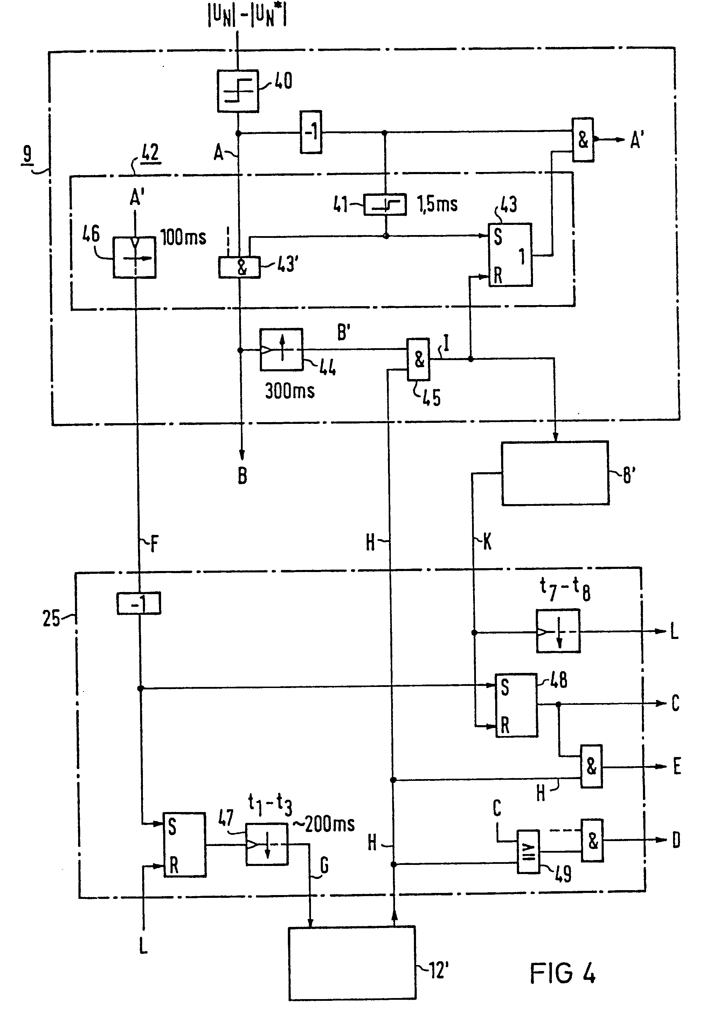

In der Mitte der Fig. 3 sind auf einer Zeitachse t verschiedene Zeitpunkte angegeben, die beim Ablauf einer typischen Netzstörung auftreten. Oberhalb dieser Zeitachse ist das Ausgangssignal A eines Komparators dargestellt, der durch Überwachung der Spannungsamplitude und/oder anderer kritischer Grössen des Netzes einen Netzausfall meldet. Ferner sind oberhalb dieser Zeitachse die in Fig. 2 dargestellten Schaltsignale B bis E dargestellt, während die unterhalb der Zeitachse gezeigten Impulse zwischen den einzelnen, für die Steuerung des Verfahrens nötigen Bauteilen ausgetauscht werden und zum Verständnis einer Schaltung dienen, die in Fig. 4 lediglich als Beispiel für einen möglichen inneren Aufbau dieser Steuerung dargestellt ist.

Ohne auf Einzelheiten der Schaltung nach Fig. 4 genauer einzugehen, sei hier nur die Arbeitsweise dieser Schaltung erläutert, wobei ein den jeweiligen Erfordernissen und den verfügbaren Elektronikteilen entsprechender Aufbau dem Fachmann keine Schwierigkeiten bereitet, um die im folgenden beschriebenen Funktionen zu erreichen.

Mit dem Ausgangssignal A des Komparators 40 wird mit einer gewissen Verzögerung (z.B. 1,5 ms, eingestellt am Zeitglied 41) ein Netzstörungsgedächtnis 42 gesetzt, mit dem das Auftreten und die Dauer der Netzstörung gespeichert wird. Im vorliegenden Fall meldet der Komparator 40 im Zeitintervall $t_0$ bis $t_5$ eine Netzstörung (Signal A) und im Netzstörungsgedächtnis 42 wird zum Zeitpunkt $t_1$ ein Speicherglied 43 gesetzt, das erst dann rückgesetzt wird, wenn zum Zeitpunkt $t_6$ dem Synchronisierteil 8' des netzseitigen Stromrichters ein Befehl I zum synchronisierten Wieder-Zuschalten des Netzes gegeben wird. Liegt zu diesem Zeitpunkt keine erneute Netzstörung vor, so ist das entsprechende Störungssignal B' beendet.

Das Störungssignal B' ist aus dem Komparatorsignal A abgeleitet und zeigt den um 1,5 ms verzögerten Beginn der Störung sowie die Netzwiederkehr (Zeitpunkt $t_5$) an. Durch ein UND-Gatter 43' sei dabei angedeutet, dass die Dauer der Netzstörung auch durch andere Störungen bestimmt sein kann, zu deren Erfassung weitere Speicherelemente für andere Störungsmeldungen verwendet werden können. Das Ausgangssignal B kann dazu verwendet werden, um während der Dauer der Netzstörung den Netzschalter 16 zu öffnen.

Das Signal I, mit dem die Synchronisierung des Steuersatzes 8 freigegeben wird, wird dadurch erzeugt, dass ein Signal H, das die vollzogene maschinensynchronisierte Zuschaltung des selbstgeführten Wechselrichters anzeigt, mit einem zweiten Störungssignal B' verknüpft wird (UND-Gatter 45), das ein ebenfalls vom Störungssignal A zum Zeitpunkt $t_5$ (Netzwiederkehr) angestossenes Zeitglied 44 bereitstellt.

Dieses zweite Störungssignal B' stellt praktisch die um die am Zeitglied 44 eingestellte Zeitdauer ($t_5 - t_6 = 300$ ms) verlängerte Dauer der Netzstörung dar. Diese Zeitspanne $t_5 - t_6$ ist so gewählt, dass mit Sicherheit alle Relais und Schalter angesprochen haben, die nach der Wiederkehr des Netzes zum Zeitpunkt $t_5$ geschlossen werden, um den Eingang des Stromrichters GR wieder ans Netz anzuschliessen. Diese Sicherheitszeit gewährleistet auch, dass bis zum Zeitpunkt $t_6$ Netzunsymmetrien und Schwierigkeiten bei der Erfassung der Netzfrequenz abgeklungen sind. Die Wiederaufnahme des Gleichrichterbetriebes erfolgt dann erst zum Zeitpunkt $t_6$.

Die Netzerfassungseinrichtung 9 erzeugt ferner noch ein drittes Störungssignal F, das z.B. ebenfalls zum Zeitpunkt $t_1$ vom Komparator-Ausgangssignal A angestossen ist und nur für eine fest vorgegebene Zeitspanne $t_1 - t_2$ von seinem Normalzustand (Zeitglied 46) abweicht. Dieses dritte Störungssignal F wird in der Schaltersteuerung 25 verwendet, um nach einer Zeitspanne $t_1 - t_3$, die zum sicheren Abklingen des Zwischenkreisstromes benötigt wird, ein Freigabesignal G für die Synchronisiereinheit des Steuersatzes 12 des Stromrichters WR zu liefern. Die Zeitspanne $t_1 - t_3$ kann dabei ebenfalls mittels eines Zeitgliedes 47 fest vorgegeben werden. Der Synchronisierteil 12' des maschinenseitigen Stromrichters vollzieht nun auf eine später noch erläuterte Weise die mit der Maschinenfrequenz synchronisierte Wiederaufnahme des Kommutierungstaktes und erzeugt zum Zeitpunkt $t_4$ das Signal H, das den wiederaufgenommenen, synchronisierten Betrieb des maschinenseitigen Stromrichters WR angibt.

Aus dieser Maschinensynchronisation-Vollzugsmeldung H wird, wie bereits erläutert wurde, das Steuersignal I gebildet, mit dem zum Zeitpunkt $t_6$ (dann ist einerseits ein ungestörtes Netz, andererseits die maschinensynchrone Wechselrichtertaktung sichergestellt) die Netzsynchronisation des Gleichrichters freigegeben wird. Hat der Steuersatz 8' die Synchronisation des Gleichrichters zum Zeitpunkt $t_7$ vollzogen, so wird dies durch ein entsprechendes Vollzugssignal K gemeldet und mittels eines Speichergliedes 48 in ein entsprechendes Signal C umgesetzt, das nunmehr das Ende des (mit Beginn des Signal F zum Zeitpunkt $t_1$ eingeleiteten) Störbetriebes anzeigt. Dieses Signal C und das Vollzugssignal H für die maschinenseitige Synchronisierung wird logisch miteinander (ODER-Gatter 49) und ggf. mit weiteren Signalen, die den einwandfreien Zustand des Umrichters und der Maschine kennzeichnen, zu dem Signal D verknüpft, mit dem während der Zeit $t_1$ – $t_4$ die Kommutierungssperre (Taktsperre) des Wechselrichters vollzogen und nach dem Zeitpunkt $t_4$ der getaktete Wechselrichterbetrieb wieder aufgenommen wird.

Das Signal C dient auch dazu, um durch Verknüpfung mit dem Vollzugssignal H das Signal E zu erhalten, mit dem einerseits die Zündung der beiden für den Störungsbetrieb vorgesehenen in Reihe liegenden Gleichrichterventile (Gleichrichter-Querzündung) und die Betätigung der Schaltmittel 21, 22 vorgenommen wird.

Schliesslich kann noch mittels eines aus dem Signal K abgeleiteten Impulses nach einer gewissen kurzen Betriebsdauer ($t_7$ bis $t_8$) ein Schlussimpuls L abgeleitet werden, mit dem alle verwendeten Speicher in ihren Ruhezustand versetzt werden.

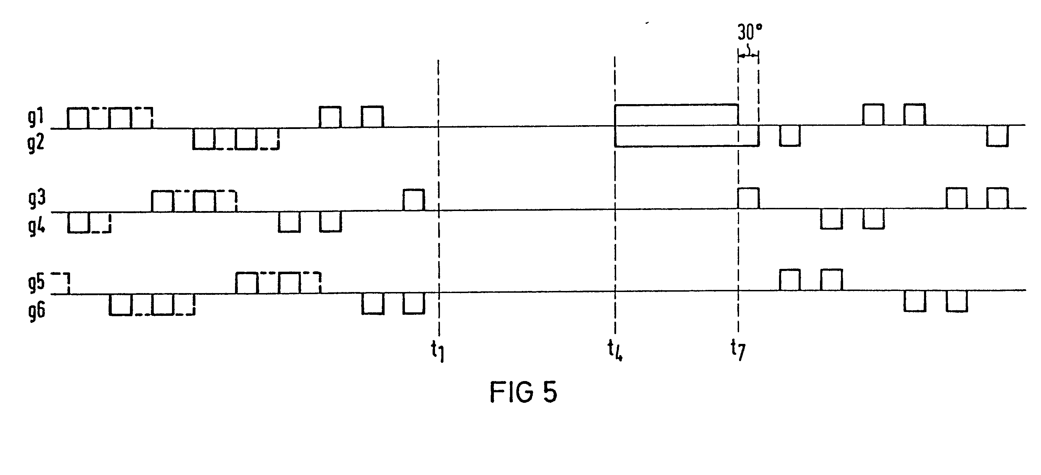

In Fig. 5 sind die Zündimpulse für die Ventile des netzseitigen Stromrichters dargestellt, wobei jeweils die Zündimpulse für zwei in Reihe liegende Ventile als positive bzw. negative Impulse eines gemeinsamen Impulszuges symbolisch dargestellt sind. Ein Zündimpuls besitzt dabei jeweils eine Länge von 30° el, wobei bei den ersten Zündimpulsen durch eine gestrichelte Linie die Stromführungsdauer des jeweiligen Ventils dargestellt ist. Vor dem Zeitpunkt $t_1$ liegt der ungestörte Gleichrichterbetrieb mit der üblichen Zündimpulsfolge vor. Zum Zeitpunkt $t_1$ werden die Zündimpulse gesperrt (Öffnen des Schalters 14 mittels des Signals C). Zum Zeitpunkt $t_4$ wird mittels des Signals E über die Signalleitung 26 der Querimpuls für die beiden ausgewählten, in Reihe liegenden Ventile w1 und w2 gegeben. Da zu diesem Zeitpunkt auch der getaktete Betrieb des Wechselrichters WR wieder aufgenommen wird, wird dadurch ein Stromkreis geschlossen, der über die Ständerwicklungen der Asynchronmaschine, die getakteten Wechselrichterventile und die Gleichrichterventile g1 und g2 führt. Der Zusatzstromregler stellt dabei sicher, dass nunmehr die Ständerwicklungen gerade den Strom führen, der zur Deckung der elektrischen Verluste der Schaltung und zur Aufrechterhaltung des gewünschten Flusses nötig ist. Die Maschine wird dabei im leicht generatorischen Betrieb gefahren und der Fluss, der sich im Intervall $t_1$ – $t_4$ (also der Zeit, die zum sicheren Erlöschen des Stromes und zur maschinensynchronen Wiederaufnahme der Wechselrichtertaktung erforderlich ist) bereits etwas abgebaut hat, wird wieder zu seiner gewünschten Grösse aufgebaut. Dieser Flussaufbau geschieht auf Kosten der kinetischen Energie der nunmehr im Leerlauf laufenden Maschine und wird dann beendet, wenn die Maschinendrehzahl soweit abgesunken ist, dass der zur Aufrechterhaltung des Flusses nötige Strom nicht mehr aufgebracht werden kann. In diesem Fall kann über den zusätzlichen Störungseingriff bei der Bildung des Signals D eine endgültige Abschaltung des Umrichters erfolgen. Bis dahin bleibt der Störungsbetrieb (quergezündeter Gleichrichter, getakteter Wechselrichter) aufrechterhalten.

Es sei angenommen, dass der Zeitpunkt $t_5$, an dem das Netz wieder vorhanden ist, frühzeitig genug liegt, damit nach der entsprechenden Schonzeit des Netzschalters 16 am Gleichrichter bereits eine ungestörte Netzspannung vorliegt (Zeitpunkt $t_6$). Die Taktung des Gleichrichters wird dann synchron mit der Netzspannung zum Zeitpunkt $t_7$ wieder aufgenommen. Für die Wiederaufnahme des Gleichrichterbetriebes ist es dabei vorteilhaft, wenn vom Strombetragsregler 7 zunächst ein Steuerwinkel von 90°, entsprechend einer Zwischenkreisspannung Null, vorgegeben wird. Der Zeitpunkt $t_7$, zu dem also der normale Gleichrichterbetrieb wieder aufgenommen wird, bestimmt sich dann aus den Nulldurchgängen der Netzspannung. Das Ende des Gleichrichter-Sperrsignals C kann also direkt am Synchronisierteil 8' aus der netzfrequenten Bezugsfrequenz abgeleitet werden.

Durch ein zusätzliches Steuersignal am Strombetragsregler 7 ist angedeutet, dass während des Störungsbetriebes der Stromregler 7 auf den Aussteuerungsgrad Null rückgeführt wird, um das reibungslose netzsynchrone Zuschalten des Gleichrichters zu ermöglichen. Anschliessend kann über einen Hochlaufgeber das Strombetrags-Zusatzsignal auf den zu $i_M^*$ gehörenden Aussteuerungsgrad hochgefahren werden.

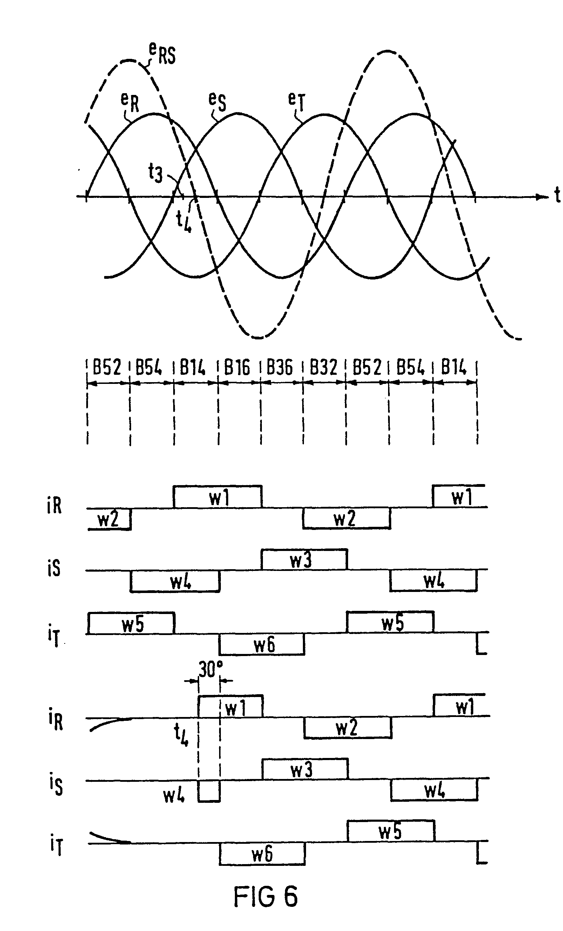

Fig. 6 verdeutlicht die maschinensynchrone Wiederaufnahme der Taktung des Wechselrichters.

Dabei ist oben zunächst der Verlauf der Steuerspannungen $e_R$, $e_S$, $e_T$ und der verketteten Spannungs $e_{RS}$ der Asynchronmaschine dargestellt. Darunter ist angedeutet, wie durch Überwachung der verketteten Spannung (Klemmenspannung) der Asynchronmaschine eine Periode der Maschinenfrequenz in 6 Teilbereiche aufgeteilt ist, wobei im ungestörten Betrieb, wie die darunterliegenden Stromblöcke der einzelnen Maschinenphasen zeigen, im Bereich B14 und B16 die Wechselrichterventile W1 und W4 bzw. W6, im Bereich B36 und B32 die Ventile W3 und W6 bzw. W2 und im Bereich B52 bzw. B54 die Ventile W5 und W2 bzw. W4 gezündet sind.

Diese zyklische Taktfolge ist entsprechend den drei letzten Zeilen der Fig. 6 bei der Umrichtersperre unterbrochen. Wird also z.B. die Taktsperre zum Zeitpunkt $t_1$ im Bereich B52 vorgenommen, so bleiben zunächst die Ventile W5 und W2 angesteuert, sie erlöschen jedoch mit dem Abklingen des Zwischenkreisstromes. Wenn nun an den Synchronisierteil 12' das Freigabesignal G angelegt wird (Zeitpunkt $t_3$), so kann das Synchronisierteil das zugehörige Zeitintervall, im Beispiel der Figur 6 das Intervall B14, ermitteln. Jedes dieser Intervalle enthält den Nulldurchgang einer verketteten Spannung bzw.

einer Ventilspannung. Daher kann der Synchronisierteil nunmehr mit dem Nulldurchgang dieser Ventilspannung (Zeitpunkt $t_4$) auch das entsprechende, in Durchlaufrichtung liegende Ventil zünden, im Beispiel also die Ventile 1 und 4. Dadurch ist der Ausgangspunkt für den Zyklus der Wechselrichterkommutierung festgelegt und 30° nach dem Nulldurchgang dieser Spannung kann in diesem Zyklus weiter kommutiert werden.

Dadurch ist sichergestellt, dass der Ständerstromvektor bei seiner Zuschaltung auf die Maschine synchron mit dem Fluss liegt und nunmehr entsprechend dem Hochfahren des Magnetisierungsstroms durch den Zusatz-Stromregler 20 auf die gewünschte Höhe aufgebaut wird. Bei dieser Massnahme werden also zur Wiederaufnahme des Kommutierungstaktes zunächst bei dem der Aufhebung der Impulssperre benachbarten Nulldurchgang einer verketteten Spannung die in Durchlassrichtung dieser Spannung liegenden Ventile gezündet und 30° el nach dem Nulldurchgang wird auf die entsprechend dem Dreh-Sinn der Maschine im Wechselrichter-Zyklus folgenden Ventile kommutiert.

Mit diesem Verfahren der «kinetischen Pufferung» ist es somit möglich, Einbrüche des Flusses während einer Netzstörung zu überbrücken, so dass bei wiedergekehrtem Netz sofort mit dem Aufbau des zum gewünschten Solldrehmoment gehörenden Wirkstroms begonnen werden kann.

**Patentansprüche**

1. Verfahren zum Betrieb einer über einen Stromzwischenkreisumrichter (GR, WR) aus einem Wechselspannungsnetz (N) gespeisten Asynchronmaschine (ASM) bei einer Störung des speisenden Netzes, wobei bei Beginn der Netzstörung ein erster Schritt durchgeführt wird:
a) der Umrichter wird gesperrt, bis der Strom im Zwischenkreis abgeklungen ist,
dadurch gekennzeichnet, dass anschliessend folgende Schritte durchgeführt werden:
b) durch Wiederaufnahme der Taktung des selbstgeführten maschinenseitigen Stromrichters (WR) wird der Maschinenstrom ($i_\mu$) über den Zwischenkreis und zwei in Reihe liegende Ventile des netzseitigen Stromrichters (GR) wieder aufgebaut, wobei die Taktfrequenz ($f_M$) des maschinenseitigen Stromrichters der Maschinenfrequenz ($_\mu$) derart nachgeführt wird, dass der Maschinenstrom den zur Aufrechterhaltung eines gewünschten Flusses nötigen Wert annimmt, und
c) nach Beendigung der Netzstörung wird der netzgeführte netzseitige Stromrichter (GR) netzsynchron zugeschaltet (Fig. 2).

2. Verfahren nach Anspruch 1, dadurch gekennzeichnet, dass bei der Sperrung des Umrichters die Zündung der Ventile des netzseitigen Stromrichters (GR) gesperrt (Fig. 3: Gleichrichtersperr-Signal C) und der Kommutierungstakt des maschinenseitigen Stromrichters angehalten (Wechselrichterkommutierung-Sperrsignal D) wird.

3. Verfahren nach Anspruch 1 oder 2, dadurch gekennzeichnet, dass die Umrichtersperre für eine vorgegebene Zeit, insbesondere zwischen etwa 100 und 200 ms, aufrechterhalten wird.

4. Verfahren nach einem der Ansprüche 1 bis 3, dadurch gekennzeichnet, dass zur Wiederaufnahme des Kommutierungstaktes im maschinenseitigen Stromrichter zunächst bei einem dem Zeitpunkt (Fig. 6: $t_4$) der Aufhebung der Impulssperre der benachbarten Nulldurchgang einer verketteten Maschinenspannung die in Durchlassrichtung dieser Spannung liegenden Ventile (w 1, w4) gezündet werden und etwa 30° el nach diesem Nulldurchgang auf die im Kommutierungszyklus des maschinenseitigen Stromrichters folgenden Ventile (W1, W6) kommutiert wird.

5. Verfahren nach einem der Ansprüche 1 bis 4, dadurch gekennzeichnet, dass zur Wiederaufnahme der Taktung des maschinenseitigen Stromrichters diesem seine Taktimpulse synchron mit der Maschinenfrequenz ($f_\mu$) vorgegeben werden und dass anschliessend die Taktfrequenz ($f_M$) der Taktimpulse in Abhängigkeit von der Regelabweichung zwischen dem gemessenen Maschinenstrom ($i_\mu$) und einem aus der Maschinenfrequenz ($f_\mu$) abgeleiteten Maschinenstrom-Sollwert ($i_\mu^*$) ausgeregelt wird.

6. Verfahren nach einem der Ansprüche 1 bis 5, dadurch gekennzeichnet, dass der netzseitige Stromrichter (GR) beim Zuschalten zunächst netzgeführt auf den Aussteuerungsgrad Null ausgesteuert ist und anschliessend netzgeführt auf einen dem Sollstrom im ungestörten Betrieb entsprechenden Wert hochgefahren wird.

7. Verfahren nach einem der Ansprüche 1 bis 6, dadurch gekennzeichnet, dass aus dem Vergleich eines Frequenzsollwerts und eines Frequenzistwerts der Sollwert (W*) einer Lastzustandsgrösse gebildet und aus elektrischen Grössen der Maschine ein Istwert (W) der Lastzustandsgrösse berechnet wird, dass durch Lastzustandsgrössenvergleich eine Grösse gebildet wird, die einerseits als Frequenzistwert verwendet wird und andererseits im Normalbetrieb die Frequenz des maschinengeführten Stromrichters steuert, dass während der Netzstörung die Maschinenfrequenz ($f_\mu$) als Frequenzsollwert verwendet wird, und dass gleichzeitig mit dem Zuschalten des netzseitigen Stromrichters ein kontinuierlich von der Maschinenfrequenz in einen für den Normalbetrieb vorgesehenen Vorgabewert ($f_M$) übergehender Frequenzsollwert verwendet wird.

8. Verfahren nach einem der Ansprüche 1 bis 7, dadurch gekennzeichnet, dass der maschinensynchrone Takt aus den Klemmenspannungen der Maschine abgeleitet wird.

9. Verfahren nach einem der Ansprüche 1 bis 8, dadurch gekennzeichnet, dass Netzstörungen unter einer vorgegebenen Mindestdauer nicht erfasst werden.

10. Verfahren nach einem der Ansprüche 1 bis 9, dadurch gekennzeichnet, dass zur Steuerung des Verfahrens elektronische Bauteile verwendet werden, deren Versorgungsspannung während der Netzstörung an der Maschinenspannung abgegriffen ist.

11. Verfahren nach einem der Ansprüche 1 bis 10, dadurch gekennzeichnet, dass bei der Umrichtersperrung die Zündimpulse auf den zuletzt gezündeten Ventilen des maschinenseitigen Stromrichters für eine vorbestimmte Zeit erhalten bleiben.

12. Vorrichtung zur Durchführung des Verfahrens nach einem der Ansprüche 1 bis 11 mit folgenden Merkmalen:

a) ein netzseitig einen netzgeführten Stromrichter (GR), einen Gleichstromzwischenkreis und maschinenseitig einen selbstgeführten Stromrichter (WR) enthaltender Umrichter ist an eine Asynchronmaschine (ASM) angeschlossen,

b) eine Regeleinrichtung (1 bis 13) bildet die Zündimpulse für den netzgeführten und den selbstgeführten Stromrichter,

c) eine Netzerfassungseinrichtung (9) überwacht den Zustand des speisenden Netzes (N) und sperrt beim Auftreten einer Netzstörung den Umrichter, gekennzeichnet durch folgende weitere Merkmale:

d) ein Zusatz-Stromregler (20) bildet ein Steuersignal für die Frequenz des selbstgeführten Stromrichters (WR) bei Netzstörung,

e) durch Schaltmittel (21, 22) ist im Normalbetrieb das Ausgangssignal ($f_\mu^*$) des Zusatz-Stromreglers (20) vom maschinenseitigen Steuersatz (12) getrennt und der gemessenen Maschinenfrequenz ($f_\mu$) durch eine Regelschleife (24, 23, 22) nachgeführt, und bei Netzstörung ist der Eingang des Zusatz-Stromreglers von der Regelabweichung eines, vorzugsweise mittels eines Kennliniengebers (28) aus der Maschinenfrequenz abgeleiteten, Stromsollwertes vom Maschinenstrom-Istwert beaufschlagt und der Eingang des maschinenseitigen Steuersatzes (12) auf den Reglerausgang aufgeschaltet, und

f) eine Schaltsteuerung (25) steuert im Zusammenwirken mit der Netzerfassungseinrichtung (9) und den Steuersätzen (8, 12) der beiden Stromrichter die Schaltmittel (21, 22) und die Aufschaltung von Zündimpulsen auf die Stromrichter derart, dass die Zündimpulse für den netzgeführten Stromrichter (GR) unterbrochen und der Kommutierungstakt des selbstgeführten Stromrichters (WR) gesperrt bleibt, bis der Zwischenkreisstrom erloschen ist, dass anschliessend die Schaltmittel (21, 22) betätigt, zwei in Reihe liegende Ventile (g1, g2) des netzgeführten Stromrichters (GR) gezündet und der selbstgeführte Stromrichter (WR) synchron mit der Maschinenfrequenz wieder getaktet wird, und dass nach Wiederkehr des ungestörten Netzes die Schaltmittel wieder in ihre Ausgangsstellung gebracht und der netzgeführte Stromrichter auf das Netz aufgeschaltet wird.

13. Vorrichtung nach Anspruch 12, dadurch gekennzeichnet, dass für einen Betrieb der Asynchronmaschine in beiden Drehrichtungen das Vorzeichen des Strom-Sollwertes und der Maschinenfrequenz umschaltbar ist.

14. Vorrichtung nach Anspruch 12 oder 13, dadurch gekennzeichnet, dass die Regeleinrichtung einen den netzgeführten Stromrichter (GR) steuernden Strombetragsregler (7) und einen die Frequenz des Stromes regelnden Lastzustandsregler (11) enthält, wobei ein übergeordneter Drehzahlregler (4) aus einem Drehzahlsollwert ($f_M^*$) und einem am Ausgang des Lastzustandsreglers (11) abgegriffenen Drehzahl-Istwert eine Steuergrösse bildet, aus der der Strombetrags-Sollwert des Strombetragsreglers und der Lastzustands-Sollwert des Lastzustandsreglers abgeleitet wird und dass eine Lasterfassungseinrichtung (13) aus den elektrischen Grössen der Maschine den Lastzustand-Istwert berechnet, der auch dem Ausgangssignal des Zusatz-Stromreglers (20) additiv überlastet ist.

15. Vorrichtung nach einem der Ansprüche 12 bis 14, gekennzeichnet durch eine Eingabeeinrichtung mit einem nachgeordneten Hochlaufgeber für einen Drehzahlsollwert bei ungestörtem Betrieb, und einen Umschalter (27), der dem Eingang des Hochlaufgebers während der Netzstörung die Maschinenfrequenz ($f_\mu$) aufschaltet.

## Claims

1. A method of operating an asynchronous machine (ASM) fed from an alternating voltage supply unit (N) by an intermediate current-source inverter (GR, WR) in the event of a power supply failure, in which the beginning of the power failure initiates a first step wherein:

a) the inverter is blocked until the current in the intermediate circuit has subsided,
characterised in that the following steps are subsequently carried out:

b) during the resumption of pulsing of the self-commutated current rectifier (WR) on the machine-side the machine current ($i_\mu$) is built up by means of the intermediate circuit and two series-arranged valves of the current rectifier (GR) at the mains end, where the clock pulse frequency ($f_M$) on the machine-side current rectifier follows up the machine frequency ($f_\mu$) such that the machine current assumes the value required for maintenance of a required flow; and

c) after the mains failure the mains-commutated mains current rectifier (GR) is mains-synchronously connected. (Fig. 2).

2. A method as claimed in Claim 1, characterised in that when the inverter (GR) is blocked the ignition of the valves of the mains-side current rectifier (GR) is blocked (Fig. 3; rectifier blocking signal C) and the commutation clock pulse of the machine-side current rectifier is stopped (alternating rectifier commutation blocking signal D).

3. A method as claimed in Claim 1 or 2, characterised in that the inverter interruption is maintained for a predetermined time, in particular between approximately 100 and 200 ms.

4. A method as claimed in one of Claims 1 to 3, characterised in that in order to resume the commutation clock pulse in the machine-side current rectifier the valves (W1, W4) arranged in the conductive direction for the machine voltage are initially ignited at the zero transit of an interlinked machine voltage, which is adjacent to the time (Fig. 6: $t_4$) of the cancellation of the pulse interruption, and commutation is carried out to the valves (W1, W5), which follows in the commutation cycle of the machine-side current rectifier approximately 30° after said zero transit.

5. A method as claimed in one of Claims 1 to 4, characterised in that in order to resume the pulsing of the machine-side current rectifier its clock pulses are impressed on the machine-side current rectifier synchronously with the machine frequency $(f_\mu)$ and that the clock pulse frequency $(f_M)$ of the clock pulses is subsequently controlled in dependence upon the control deviation between the measured machine current $(i_\mu)$ and a theoretical machine current value $(i_\mu^*)$ derived from the machine frequency $(f_\mu)$.

6. A method as claimed in one of Claims 1 to 5, characterised in that during the connection the mains-side current rectifier (GR) is initially controlled to zero degrees so as to be mains-commutated and subsequently run up to a value corresponding to the theoretical current during uninterrupted mains-commutated operation.

7. A method as claimed in one of Claims 1 to 6, characterised in that the theoretical value (W*) of a load state magnitude is formed from the comparison between a theoretical frequency value and an actual frequency value, and an actual value (W) of the load state magnitude is calculated from electrical magnitudes of the machine, that by means of a comparison between load state magnitudes a value is formed which is used as an actual frequency value and during normal operation controls the frequency of the machine-commutated current rectifier, that during the power failure the machine frequency $(f_\mu)$ is used as a theoretical frequency value, and that simultaneously with the connection of the mains-side current rectifier a theoretical frequency value is used which continuously changes from the machine frequency to an advance value $(f_M^*)$ provided for the normal operation.

8. A method as claimed in one of Claims 1 to 7, characterised in that the machine-synchronous clock pulse is derived from the terminal voltages of the machine.

9. A method as claimed in one of Claims 1 to 8, characterised in that power failures below a predetermined minimal duration are not taken account of.

10. A method as claimed in one of Claims 1 to 9, characterised in that for control purposes electronic components are used whose supply voltage is tapped at the machine voltage during the power failure.

11. A method as claimed in one of Claims 1 to 10, characterised in that during the inverter interruption the ignition pulses are maintained for a predetermined time on the last ignited valves of the machine-side current rectifier.

12. Apparatus for the implementation of the method as claimed in one of Claims 1 to 11 having the following features:

a) an inverter, which at the mains-side comprises a mains-commutated rectifier (GR), an intermediate d.c. circuit and a self-commutated current rectifier (WR) is connected to an asynchronous machine (ASM) at the machine-side;

b) a control device (1 to 13) forms the ignition pulses for the mains-commutated and the self-commutated current rectifier;

c) a mains detection device (9) monitors the state of the power supply unit (N) and blocks the inverter on occurrence of a power failure; characterised by the following further features:

d) an additional current rectifier (20) forms a control signal for the frequency of the self-commutated current rectifier (WR) during power failure;

e) during normal operation the output signal $(f_\mu^*)$ of the additional current controller (20) is separated from the machine-side control set (12) by switching means (21, 22) and follows up the measured machine frequency $(f_\mu)$ by means of a control loop (24, 23, 22), and during power failure the input of the additional current rectifier is acted upon by the actual value of the machine current from the control deviation of a theoretical current value preferably derived from the machine frequency by means of a characteristic generator (28), and the input of the machine-side control set (12) is connected to the output of the regulator; and

f) a switching control unit (25) controls the switching means (21, 22) and the connection of ignition pulses to the current rectifiers in cooperation with the mains detecting device (9) and the control sets (8, 12) of the two current rectifiers, such that the ignition pulses for the mains-commutated current rectifier (GR) remain interrupted and the commutation clock pulse of the self-commutated current rectifier (WR) remains blocked until the intermediate circuit current has lapsed, that the switching means (21, 22) are subsequently operated, two series-connected valves (g1, g2) of the mains-commutated current rectifier (GR) are ignited and the self-commutated current rectifier (WR) is restarted synchronously with the machine frequency, and that when uninterrupted mains operation has reoccurred the switching means are brought into their initial position and the mains-commutated current rectifier is connected to the mains.

13. Apparatus as claimed in Claim 12, characterised in that for operation of the asynchronous machine in both directions of rotation the symbol of the theoretical current value and the machine frequency can be changed over.

14. Apparatus as claimed in Claim 12 or 13, characterised in that the control device comprises a current value regulator (7), which controls the mains-commutated current rectifier (GR), and a load state regulator (11) which controls the frequency of the current, where a superimposed speed regulator (4) forms a control magnitude from a theoretical value $(f_M^*)$ of the number of revolutions and an actual value of number of revolutions which is tapped at the output of the load state regulator (11), from which control magnitude the current rate theoretical value of the current value regulator and the load state theoretical value of the load state regulator is derived, and that a load detection device (13) calculates the load state actual value from the electrical magnitudes of the machine, which load state actual value is additively superimposed upon the output signal of the additional current regulator (20).

15. Apparatus as claimed in one of Claims 12 to 14, characterised by an input device having a following run-up generator for a theoretical value of the number of revolutions during uninterrupted operation, and a change-over switch (27) which connects the machine frequency ($f_\mu$) to the input of the run-up generator during the power failure.

**Revendications**

1. Procédé pour le fonctionnement pendant une panne du réseau d'alimentation d'un moteur asynchrone (ASM) alimenté à partir d'un réseau à tension alternative (N) par un convertisseur à circuit intermédiaire courant (GR, WR), procédé qui comprend, au débout du dérangement de réseau, l'exécution d'une première opération:

a) le convertisseur est bloqué jusqu'à ce que le courant dans le circuit interméidaire se soit évanoui, caractérisé en ce que, ensuite, les opérations suivantes sont exécutées:

b) par reprise du séquencement du mutateur (WR) autopiloté côté moteur, le courant moteur ($i_\mu$) est rétabli à travers le circuit intermédiaire et deux soupapes montées en série du mutateur (GR) côté réseau, avec asservissement de la fréquence de séquencement ($f_m$) du mutateur côté moteur à la fréquence moteur ($f_\mu$), de manière que le courant moteur prenne la valeur nécessaire au maintien d'un flux désiré, et

c) après la fin de dérangement du réseau, le mutateur (GR) côté réseau, piloté par le réseau, est reconnecté en synchronisme avec le réseau (Fig. 2).

2. Procédé selon la revendication 1, caractérisé en ce que, au blocage du convertisseur, l'amorçage des soupapes du mutateur (GR) côté réseau est bloqué (Fig. 3i, signal C de blocage du redresseur) et la commutation rythmée du mutateur côté moteur est arrêtée (signal D de blocage de la commutation de l'onduleur).

3. Procédé selon la revendication 1 ou 2, caractérisé en ce que le blocage du convertisseur est maintenu pendant un temps préfixé, compris en particulier entre environ 100 et 200 ms.

4. Procédé selon une des revendications 1 à 3, caractérisé en ce que, pour la reprise de la commutation rythmée dans le mutateur côté moteur, on produit d'abord, lors d'un passage par zéro d'une tension par phase du moteur, passage par zéro qui est voisin de l'instant (Fig. 6: $t_4$) de la suppression du blocage des impulsions, l'amorçage des soupapes (w1, w4) montées dans le sens passant de cette tension et, environ 30° électriques après ce passage par zéro, on produit la commutation des soupapes (w1, w6) suivantes dans le cycle de commutation du mutateur côté moteur.

5. Procédé selon une des revendications 1 à 4, caractérisé en ce que, pour la reprise du séquencement du mutateur côté moteur, on fournit à celui-ci ses impulsions de séquencement en synchronisme avec la fréquence moteur ($f_\mu$) et que, ensuite, la fréquence de séquencement ($f_M$) des impulsions de séquencement est réglée en fonction de l'écart de réglage entre le courant moteur mesuré ($i_\mu$) et une valeur de consigne du courant moteur ($i_\mu^*$) dérivée de la fréquence moteur ($f_\mu$).

6. Procédé selon une des revendications 1 à 5, caractérisé en ce que le mutateur (GR) côté réseau, lors de la connexion, est d'abord réglé au coefficient de réglage zéro, en étant piloté par le réseau, et est ensuite monté, en étant piloté par le réseau, à une valeur correspondant au courant de consigne dans le régime non perturbé.

7. Procédé selon une des revendications 1 à 6, caractérisé en ce que l'on forme, à partir de la comparaison d'une valeur de consigne de fréquence et d'une valeur réelle de fréquence, la valeur de consigne ($W^*$) d'une grandeur d'état de charge et on calcule, à partir de grandeurs électriques du moteur, une valeur réelle ($W$) de la grandeur d'état de charge, que l'on forme, par comparaison de grandeurs d'état de charge, une grandeur qui, d'une part, est utilisée en tant que valeur réelle de fréquence et, d'autre part, commande, au régime normal, la fréquence du mutateur piloté par le moteur, que la fréquence moteur ($f_\mu$) est utilisée comme valeur de consigne de fréquence pendant le dérangement du réseau et que, simultanément avec la connexion du mutateur côté réseau, on utilise une valeur de consigne de fréquence qui passe de façon continue de la fréquence moteur à une valeur préfixée ($f_M^*$) prévue pour le régime normal.

8. Procédé selon une des revendications 1 à 7, caractérisé en ce que le rythme en synchronisme avec le moteur est dérivé des tensions aux bornes du moteur.

9. Procédé selon une des revendications 1 à 8, caractérisé en ce que des dérangements du réseau dont la durée est inférieure à une durée minimale préfixée ne sont pas détectés.

10. Procédé selon une des revendications 1 à 9, caractérisé en ce que, pour commencer le processus, on utilise des composants électroniques dont la tension d'alimentation est prélevée sur la tension moteur pendant le dérangement du réseau.

11. Procédé selon une des revendications 1 à 10, caractérisé en ce que, lors du blocage du convertisseur, les impulsions d'amorçage appliquées aux soupapes amorcées en dernier du mutateur côté moteur, sont maintenues pendant un temps préfixé.

12. Appareillage pour la mise en œuvre du procédé selon une des revendications 1 à 11, ayant les particularités suivantes:

a) à un moteur asynchrone (ASM) est raccordé un convertisseur qui contient, côté réseau, un mutateur (GR) piloté par le réseau, un circuit intermédiaire à courant continu et, côté moteur, un mutateur (WR) autopiloté,

b) un dispositif de réglage (1 à 13) forme les impulsions d'amorçage pour les mutateurs piloté par le réseau et autopiloté,

c) un dispositif de détection du réseau (9) surveille l'état du réseau d'alimentation (N) et bloque le convertisseur en cas de dérangement du réseau, caractérisé en ce que:

d) un régulateur de courant supplémentaire (20) forme un signal de commande pour la fréquence du mutateur autopiloté (WR) en cas de dérangement du réseau,

e) au régime normal, des moyens de couplage (21, 22) séparent le signal de sortie ($f_\mu^*$) du régulateur de courant supplémentaire (20) de l'élément de déclenchement (12) et une boucle de régulation (24, 23, 22) assure l'asserviment de ce signal à la fré-

quence moteur mesurée ($f_\mu$) et, en cas de dérangement du réseau, l'entrée du régulateur de courant supplémentaire est alimentée avec l'écart de réglage d'une valeur de consigne de courant, dérivée de la fréquence moteur, de préférence au moyen d'un générateur de caractéristiques (28), par rapport à la valeur réelle du courant moteur, et l'entrée de l'élément de déclenchement (12) côté moteur est connectée à la sortie du régulateur, et

f) une commande de commutation (25) commande, en coopération avec le dispositif de détection du réseau (9) et les éléments de déclanchement (8, 12) des deux mutateurs, les moyens de couplage (21, 22) et l'application d'impulsions d'amorçage aux mutateurs, de manière que les impulsions d'amorçage pour le mutateur (GR) piloté par le réseau soient interrompues et la commutation rythmée du mutateur autopiloté (WR) reste bloquée, jusqu'à ce que le courant de circuit intermédiaire se soit annulé, que, ensuite, les moyens de couplage (21, 22) sont actionnés, deux soupapes (G1, G2) montées en série du mutateur (GR) piloté par le réseau sont amorcées et le mutateur autopiloté (WR) est de nouveau séquencé en synchronisme avec la fréquence moteur et que, après le retour du réseau non perturbé, les moyens de couplage sont ramenés à leurs position de départ et le mutateur piloté par le réseau est reconnecté au réseau.

13. Appareillage selon la revendication 11, caractérisé en ce que le signe de la valeur de consigne et le signe de la fréquence moteur peuvent être inversés pour un fonctionnement du moteur asynchrone dans les deux sens de rotation.

14. Appareillage selon la revendication 12 ou 13, caractérisé en ce que le dispositif de réglage contient un régulateur d'intensité (7) qui commande le mutateur (GR) piloté par le réseau et un régulateur d'état de charge (11) qui règle la fréquence du courant, un régulateur de vitesse de rotation (4), qui est prioritaire, forme, à partir d'une valeur de consigne de la vitesse de rotation ($f_{\dot M}$) et d'une valeur réelle de la vitesse de rotation prélevée sur la sortie du régulateur d'état de charge (11), une grandeur de commande d'où sont dérivées la valeur de consigne d'intensité du régulateur d'intensité et la valeur de consigne de l'état de charge du régulateur d'état de charge, et qu'un dispositif de détection de charge (13) calcule, à partir des grandeurs électriques du moteur, la valeur de consigne de l'état de charge, laquelle est également superposée, en addition, au signal de sortie du régulateur de courant supplémentaire (20).

15. Dispositif selon une des revendications 12 à 14, caractérisé par un dispositif d'entrée suivi d'un capteur d'accélération pour une valeur de consigne de la vitesse de rotation au régime non perturbé, ainsi que par un inverseur (27) qui, pendant le dérangement du réseau, applique la fréquence moteur ($f_\mu$) à une entrée du capteur d'accélération.

FIG 1

0 142 808

FIG 2

15

FIG 3

$|U_N| - |U_N^*|$

FIG 4

FIG 5

0 142 808

FIG 6